**Europäisches Patentamt**

**European Patent Office**

**Office européen des brevets**

(19)

(11) Veröffentlichungsnummer: **0 153 713**
**B1**

(12) **EUROPÄISCHE PATENTSCHRIFT**

(45) Veröffentlichungstag der Patentschrift:
20.04.88

(21) Anmeldenummer: **85101953.9**

(22) Anmeldetag: **22.02.85**

(51) Int. Cl.⁴: **B 01 D 13/00,** C 08 J 5/22,
C 25 B 13/08

(54) Membranen aus im wesentlichen unvernetzten organischen Polymeren, die ionogene Gruppen gebunden enthalten.

(30) Priorität: **02.03.84  DE 3407719**

(43) Veröffentlichungstag der Anmeldung:
**04.09.85 Patentblatt 85/36**

(45) Bekanntmachung des Hinweises auf die Patenterteilung:
**20.04.88 Patentblatt 88/16**

(84) Benannte Vertragsstaaten:
**AT BE CH DE FR GB IT LI NL**

(56) Entgegenhaltungen:
**DE - A - 3 130 040**
**FR - A - 2 193 060**
**GB - A - 1 501 819**

(73) Patentinhaber: **BASF Aktiengesellschaft,**
**Carl-Bosch-Strasse 38, D-6700 Ludwigshafen (DE)**

(72) Erfinder: **Sterzel, Hans-Josef, Dr., Wasgauring 3,**
**D-6701 Dannstadt-Schauernheim (DE)**
Erfinder: **Sanner, Axel, Dr., Lorscher Ring 2 c,**
**D-6710 Frankenthal (DE)**

## Beschreibung

Kationen- und Anionenaustauscher-Membranen werden in Elektrodialyseanlagen mit Erfolg zur Abtrennung oder Aufkonzentrierung von Elektrolyten eingesetzt. Beispiele sind die Entsalzung von Brackwasser, die Aufkonzentrierung von Kochsalz aus Meerwasser, die Entsalzung industrieller Abwässer, die Entsalzung von Lebensmitteln oder die Abtrennung von Salzen aus Reaktionslösungen neutraler Wertprodukte.

Obwohl die Verwendung von Ionenaustauscher-Membranen in der Elektrodialyse schon seit geraumer Zeit Stand der Technik ist, weisen solche Membranen einige schwerwiegende Nachteile auf: Zunächst setzen die bekannten Membranen dem Ionenfluss einen relativ hohen elektrischen Widerstand entgegen. Die Energieausbeute des Verfahrens wird linear mit steigendem Widerstand erniedrigt. Aufgrund dieses Energieverlustes verbieten sich in vielen Bereichen der Technik Elektrodialyseverfahren unter Verwendung solcher Membranen. Solche Membranen werden z.B. beschrieben in DE-A-27 37 131 und DE-A-29 10 793.

Zweitens leiden die bekannten Membranen an einer ungenügenden Temperaturbeständigkeit. Bedingt durch den Widerstand wird in den Membranen der entsprechende Spannungsabfall in Wärme umgesetzt und die Membranen aufgeheizt.

Bei den konventionellen Ionenaustauscher-Membranen handelt es sich in der Regel um vernetzte Polystyrole, die Sulfonsäuregruppen oder quaternäre Ammoniumgruppen enthalten. Auch Copolymerisate auf der Basis Acrylnitril/Methallylsulfonat oder Vinylpyridin oder auch chlorsulfoniertes Polysulfon werden zur Herstellung von Ionenaustauscher-Membranen eingesetzt.

In der GB-A-1 501 819 werden Kationenaustauscher-Membranen beschrieben, die im wesentlichen aus unvernetzten Copolymeren aus Ethylen und einer ungesättigten Carbonsäure bestehen, wobei die ionogene Carboxylgruppe über einen bis zu 10 $CH_2$-Einheiten enthaltenden Alkylenrest an die Copolymerkette gebunden ist. Die Erweichungstemperatur dieser Polymeren liegt unterhalb 80, vorzugsweise unterhalb 70 °C, was für Elektrodialyse-Anwendungen von Nachteil ist, da der Spannungsabfall durch den Membranwiderstand in Wärme umgesetzt wird, was zum Erweichen und zum Ausfall der Membranen führt.

Es war deshalb die technische Aufgabe gestellt, Membranen mit ionogenen Gruppen zur Verfügung zu stellen, die eine hohe Energieausbeute gewährleisten, wärmebeständig sind, und nach thermoplastischen Verfahrensweisen hergestellt werden können.

Diese Aufgabe wird gelöst durch Membranen aus im wesentlichen unvernetzten, aromatischen Strukturelemente enthaltenden organischen Polymeren mit einer Erweichungstemperatur oberhalb 80 °C, die an der Polymerkette über einen Alkylenrest in einem Abstand von mindestens 4 Kohlenstoffatomen gebundene ionogene Gruppen enthalten.

Die neuen Membranen haben den Vorteil, dass sie eine hohe Energieausbeute ermöglichen und sich durch einen geringeren Widerstandswert auszeichnen, wodurch eine höhere Belastbarkeit der Membrane ermöglicht wird.

Vorteilhaft haben die organischen Polymeren eine hohe Beständigkeit gegenüber Säuren und Basen. Die erfindungsgemäss verwendeten Polymeren weisen aromatische Strukturlemente auf. Geeignete Matrixpolymere sind beispielsweise Polystyrol, aromatische Polysulfone, aromatische Polyethersulfone, Polyphenylenether oder aromatische Polyetherketone. Die Polymeren sind im wesentlichen unvernetzt, so dass sie thermoplastisch verarbeitet werden können. Besonders bevorzugt werden Polysulfon und Polyethersulfon als Polymere.

An der Polymerkette sind über einen Alkylenrest in einem Abstand von mindestens 4 Kohlenstoffatomen ionogene Gruppen gebunden. Geeignet sind hierfür geradkettige und verzweigte Alkylenreste. Besonders vorteilhaft haben die Alkylenreste 6 bis 22 Kohlenstoffatome, insbesondere 6 bis 14 Kohlenstoffatome. Da die ionogenen Gruppen vorteilhaft endständig gebunden sind, beträgt deren Abstand vorzugsweise mindestens 6 Kohlenstoffatome von der Polymerkette. Besonders bevorzugt sind die Alkylenketten an die aromatischen Strukturelemente des organischen Polymeren gebunden.

Vorteilhaft unterscheiden sich die ionogene Gruppen enthaltenden Alkylenreste in ihrer Polarität und ihrem Löslichkeitsparameter von dem organischen Polymeren, an das sie gebunden sind. Der Unterschied der Löslichkeitsparameter der Strukturelemente von Polymeren und Seitenkette sollte mindestens 1 $Joule^{1/2}/cm^{3/2}$ betragen.

Bevorzugte ionogene Gruppen, die über Alkylenreste an die organischen Polymeren gebunden sind, sind tertiäre Aminogruppen oder quaternäre Ammoniumgruppen, ferner Carboxylgruppen und Sulfonsäuregruppen. Sollen die Membranen als Kationenaustauscher verwendet werden, so enthalten sie Sulfonsäure oder Carboxylgruppen vorteilhaft in einer Konzentration von 0,1 bis 5 Äquivalente je kg Polymeres, vorzugsweise 0,3 bis 3 Äquivalente je kg Polymeres. Sollen die Membranen als Anionenaustauscher verwendet werden, so enthalten sie als ionogene Gruppen vorzugsweise tertiäre Amine oder quaternäre Ammoniumgruppen mit $C_1$- bis $C_4$-Alkylresten, insbesondere Trimethylammoniumgruppen in einer Konzentration von vorteilhaft 0,1 bis 5 Äquivalente, vorzugsweise 0,3 bis 3 Äquivalente je kg Polymeres.

Die ionogene Gruppen enthaltenden Alkylenreste können sowohl statistisch als auch im Blockcharakter über die Polymerkette verteilt sein.

Die Polymeren können beispielsweise durch Copolymerisation oder Cokondensation von unsubstituierten Monomeren mit den erfindungsgemässen Seitenketten substituierten Monomeren hergestellt werden. Vorteilhaft gelangt man zu den erfindungsgemässen substituierten Polymeren durch polymeranaloge Umsetzungen an den organischen Polymeren.

In die aromatische Strukturelemente enthaltenden Polymeren führt man die Seitenketten zweckmässig durch Friedel-Crafts-Acylierung ein. Hierzu löst man das umzusetzende Polymere in einem geeigneten Lösungsmittel z.B. 1,2-Dichlorethan, Nitromethan oder 2-Nitropropan und führt die Friedel-Crafts-Acylierung mit der gewünschten Menge eines ω-Chlorcarbonsäurechlorids durch. Dabei werden die üblichen Reaktionsbedingungen, d.h. Reaktionstemperaturen von −10 bis +50 °C sowie Reaktionszeiten von 2 bis 40 h in Gegenwart von üblichen Katalysatoren, wie Aluminiumchlorid, Zinkchlorid, Zinn-(IV)chlorid oder Bortrifluoridetherat, in molaren Mengen, eingehalten.

Nach Zersetzung des Katalysator/Polymer-Komplexes wird das Polymere abgetrennt und in einem zweiten Reaktionsschritt die Ketogruppe durch Reduktion mit Hydrazin in alkalischem Triglykol zur Methylengruppe reduziert. Hierbei gegebenenfalls entstehende Hydroxylgruppen werden durch Behandeln mit Thionylchlorid wieder durch Chloratome ersetzt.

Durch katalytische Reduktion in Gegenwart von Platin-Metall-Katalysatoren und Wasserstoff-Drucken bis 300 bar (30 MPa) gelingt die Reduktion der Keto-Gruppe zur Methylen-Gruppe in schonenderer Weise.

Soll eine Sulfonsäuregruppe eingeführt werden, so wird das chloralkylierte Polymere in einer Lösung von 1,4-Dioxan und Ethanol suspendiert und innerhalb von 10 h unter Rückfluss mit Thioharnstoff umgesetzt. Nach Filtration und Reinigung wird das polymere Isothiuroniumsalz unter Rühren bei Raumtemperatur mit 30-gewichtsprozentigem Wasserstoffperoxid in Gegenwart von Natriumhydroxid oxidiert. Dieser Syntheseweg ist beispielsweise beschrieben in Makromol. Chem., Rapid Commun. Band 1, 1980, Seiten 297–302.

Soll eine Carboxylgruppe eingeführt werden, so wird das chloralkylierte Polymere mit Kaliumcyanid umgesetzt und anschliessend die Nitrilgruppe zur Carbonsäuregruppe hydrolysiert.

Soll ein Polymeres hergestellt werden, das für Anionenaustauscher verwendet wird, so wird das chloralkylierte Polymere z.B. mit Trimethylamin umgesetzt.

Die Einführung der Carboxylgruppe gelingt auch in einem einzigen Schritt durch Umsetzung des Hauptkettenpolymeren mit ungesättigten Carbonsäuren, die eine olefinische Doppelbindung aufweisen, z.B. ω-Undecensäure, via Friedel-Craft-Alkylierung unter den dort üblichen Synthesebedingungen.

Während die polymeranaloge Reaktion am gelösten Polymeren gewöhnlich zur statistischen Verteilung der Seitenketten führt, gelingt es, durch Reaktionen am ungelösten, gequollenen teilkristallinen Polymeren Multiblockcopolymere sehr regelmässiger Struktur zu erhalten. In diesem Fall sind fast nur die amorphen Bereiche der teilkristallinen Polymeren der Reaktion zugänglich. Diese Arbeitsweise wird gewählt, wenn hohe mechanische Festigkeiten und hohe Chemikalienbeständigkeit bei hohen Temperaturen gefordert sind. Besonders geeignete teilkristalline Hauptkettenpolymere zum Aufbau einer Multiblockstruktur sind die aromatischen Polyetherketone. Für diese linearen unvernetzten Polymeren sind keine organischen Lösungsmittel bekannt, die die Polymeren bei Temperaturen unterhalb von 300 °C lösen. Aufgrund ihrer teilkristallinen Struktur sind sie jedoch polymeranalogen Reaktionen zugänglich, unter der Voraussetzung, dass sie in gequollenem Zustand vorliegen. Geeignete Quellungsmittel sind vor allem Nitromethan und 2-Nitropropan. In gequollenem Zustand kann dann die Friedel-Crafts-Synthese durchgeführt werden. Falls bei der anschliessenden Reduktion der Keto-Gruppen auch Keto-Gruppen des Polymeren reduziert werden, so ist dies nicht von Nachteil.

Vorteilhaft liegen solche teilkristallinen Polymere in einer Form mit grosser Oberfläche vor. Dies wird erreicht z.B. durch Auflösen von Polyetherketonen in Diphenylsulfon oberhalb 300 °C und Ausfällen in einem Nichtlösungsmittel. Auch die Verwendung von kurzgeschnittenen Fasern ist möglich. In einem bevorzugten Verfahren wird durch Extrusion durch eine Breitschlitzdüse eine Folie von 20 bis 100 μm Dicke erzeugt, die Folie längs in Bänder geschnitten und die Bänder in kurze Abschnitte geschnitten. Dieses Verfahren hat den Vorteil, dass über die Verfahrensbedingungen wie Schmelzetemperatur, Reckverhältnis und Temperatur der Kühlwalze sowie über die Zugabe geringer Mengen an Nukleierungsmitteln, z.B. 0,0001 bis 0,1 Gew.-% Talkum, die morphologischen Strukturen in reproduzierbarer Weise optimal eingestellt werden können. Damit werden sowohl der kristalline Anteil als auch die Grösse von Überstrukturen, z.B. Sphärolithen, kontrolliert.

Da die erfindungsgemässen Polymeren, die über Alkylengruppen ionogene Gruppen enthalten, im wesentlichen unvernetzt sind, lassen sie sich insbesondere durch Extrusion aus der Schmelze zu Folien verarbeiten. Zur Verbesserung der mechanischen Eigenschaften, vor allem der Reissfestigkeit, ist es vorteilhaft, die thermoplastische Schmelze nach Austritt aus oder Breitschlitzdüse des Extruders mit einem Fasergewebe z.B. aus Glas oder Polytetrafluorethylen zu laminieren. Die Dicken der trockenen Membranen können z.B. zwischen 30 μm und 300 μm eingestellt werden.

Zur Verminderung der Schmelzviskosität ist es vorteilhaft, den erfindungsgemässen Polymeren niedermolekulare Weichmacher wie Diphenylsulfon, Sulfolan, N-Methylpyrrolidon oder N-Cyclohexylpyrrolidon in einer Konzentration bis zu 20 Gew.-% zuzusetzen. Nach der Extrusion werden diese Verarbeitungshilfsmittel vorteilhaft mit Wasser oder Ethanol extrahiert.

Nach einer anderen Arbeitsweise löst man die über Alkylenreste ionogene Gruppen enthaltende Polymere in geeigneten polaren Lösungsmitteln wie Dimethylformamid, N-Methylpyrrolidon, Sulfolan, N-Methylacetamid, N,N-Dimethylacetamid, Benzylalkohol, Nitromethan, 2-Nitropropan oder Gemischen dieser Lösungsmittel und vergiesst die so erhaltene Lösung. Durch anschliessendes Verdampfen des Lösungsmittels erhält man homogene Membranen. Nach einem modifizierten Verfahren werden mikroporöse Trägermembrane z.B. aus Polypropylen, Polyethylen, Polytetrafluorethylen mit der oben aufgeführten Lösung getränkt und das Lösungsmittel verdampft.

Mit Lösungen der erfindungsgemäss substituierten Polymeren gelingt es auch, mit dem in der Membranherstellung üblichen Phaseninversionsverfahren asymmetrische Membranen herzustellen. Diese Membranen zeichnen sich durch eine sehr geringe Dicke der Trennschicht von 0,2 bis 5 µm und einem dementsprechend niedrigen elektrischen Widerstand aus. Dazu wird z.B. auf einem Trägerband die Lösung mit einem Rakel aufgebracht und der Lösungsfilm nach einer mehr oder minder langen Zeit in einem Trockenkanal in ein Fällbad geführt, das ein Fällmittel wie Methanol, Ethanol, Wasser, Kohlenwasserstoffe oder Mischungen davon enthält.

Gegenstand der Erfindung sind auch zweischichtige Membranen, die aufgebaut sind aus einer Membran aus im wesentlichen unvernetzten aromatische Strukturelemente enthaltenden organischen Polymeren mit einer Erweichungstemperatur oberhalb 80 °C, die an der Polymerkette über einen Alkylenrest in einem Abstand von mindestens 4 Kohlenstoffatomen kationenaustauschende Gruppen gebunden enthalten und einer Membran aus im wesentlichen unvernetzten organischen Polymeren, die an der Polymerkette über einen Alkylenrest in einem Abstand von mindestens 4 Kohlenstoffatomen anionenaustauschende Gruppen gebunden enthalten. Solche zweischichtige Membranen werden auch bipolare Membranen genannt. Zweckmässig bestehen die zwei Schichten wegen der besseren Verträglichkeit jeweils aus dem gleichen organischen Polymeren, das als Matrix verwendet wird.

Aufgrund der thermoplastischen Verarbeitbarkeit können bipolare Membranen, z.B. durch Aufschmelzen der Membranpolymeren in zwei verschiedenen Extrudern und Zusammenführung der Folien im Schmelzezustand innerhalb einer Zweischichtbreitschlitzdüse reproduzierbar hergestellt werden. Auch die thermische Verschweissbarkeit von Kationen- und Anionenaustauscher-Membranen durch geheizte Walzen oder durch Ultraschall ist gegeben.

In Verbindung mit monopolaren Membranen eignen sich bipolare Membranen zur Auftrennung eines Salzes MX in die Säure HX und die Base MOH durch Elektrodialyse. Bipolare Membranen nach dem Stand der Technik erhält man beispielsweise, indem man eine Emulsion aus einem Kationenaustauscher-Polymeren auf einer Anionenaustauscher-Membran oder umgekehrt koaguliert. Solche Membranen haben einen relativ hohen Flächenwiderstand um 13 $\Omega$cm$^2$.

Erfindungsgemässe bipolare Membranen weisen aufgrund des andersartigen Aufbaus des Polymeren und aufgrund der thermoplastischen Verschweissung der Kationen- und Anionenaustauscher-Membran wesentlich geringere Flächenwiderstände auf.

Der Gegenstand der Erfindung sei an folgenden Beispielen veranschaulicht.

Der elektrische Widerstand der Membranen wurde nach einer indirekten Wechselspannungsmethode gemessen (K. Hattenbach und K. Kneifel, Messung elektrochemischer Eigenschaften von Ionenaustauschermembranen, GKSS-Bericht 74/E/13, 1974).

Die Festionenkonzentration wurde durch Austauschexperimente nach K. Kneifel, K. Hattenbach und M. Arnold, GKSS-Bericht 79/E/21, 1979, bestimmt.

Der Wassergehalt wurde durch Trocknen im Vakuum bei 50 °C bestimmt. Die Dicke der gequollenen Membranen wurden mit einer Mikrometerschraube gemessen.

Zur Messung der Langzeit- und Temperaturbeständigkeit wurden die Membranen verschiedenen Medien, wie 1n HCl, 1n NaOH und einer Lösung aus 0,1n $K_2CrO_4$, 1n HCl und 1n NaCl bei 25 °C und 85° ausgesetzt. Mass für die Stabilität war die Konstanz des elektrischen Widerstands und der Festionenkonzentration.

Beispiele

Die Messungen wurden an den in Tabelle 1 aufgeführten Membranen durchgeführt, wobei die Beispiele 1–6 erfindungsgemäss sind und die Beispiele 7–10 dem Stand der Technik entsprechen.

In Tabelle 2 sind die Ergebnisse der Widerstands- und Stabilitätsmessungen aufgeführt. Danach unterscheiden sich die Erfindungsgemässen Ionenaustauscher-Membranen von konventionellen durch erheblich geringere Widerstände und erhöhte Stabilität besonders bei erhöhten Basenkonzentrationen und erhöhter Temperatur.

Beispiel 11

In Beispiel 11 (Tabelle 3) wird die Leistungsfähigkeit einer bipolaren Membran nach der Erfindung dargelegt. Die Membran wurde durch Ultraschall-Verschweissung der Kationenaustauschermembran von Beispiel 2 mit der Anionenaustauschermembran von Beispiel 4 hergestellt. In einer 1n NaCl-Lösung wies sie einen Flächenwiderstand von 1,8 $\Omega$ cm$^2$ bei 25 °C auf.

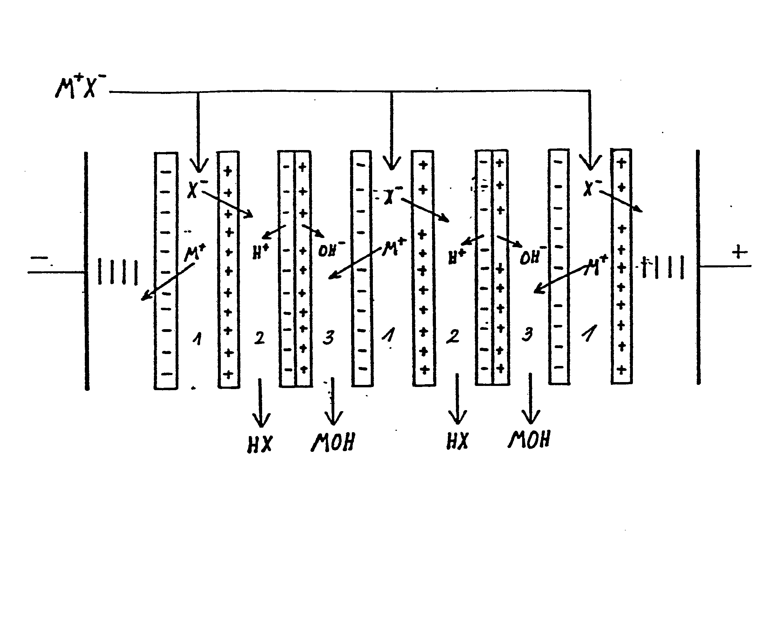

In einer Membrananordnung gemäss Fig. 1 wurde in den Kammern 1 eine 2n Natriumsulfat-Lösung, in den Kammern 2 eine Mischung aus 1n $Na_2SO_4$ und 1n $H_2SO_4$ und in den Kammern 3 eine 1n NaOH-Lösung unter Einschaltung von Vorratsbehältern und Wärmetauschern umgepumpt. Die wirksame Membranfläche betrug 78 cm$^2$. Die Temperaturen wurden in allen Kammern auf ca. 85 °C gehalten. Nun wurde für eine Zeitdauer von 2,3 Stunden ein Strom von 17,5 A durch die Anordnung geleitet, was einer Ladungsmenge von 1,5 Faraday entspricht. Die Stromstärke wurde durch eine elektronische Regeleinheit konstant gehalten.

Die Aufstellung in Tabelle 3 gibt die Konzentrations- und Volumenverhältnisse, bezogen auf eine bipolare Membran vor und nach dem Dialyse-Verfahren, an.

Damit lag die Stromausbeute für die Säureproduktion bei 98% und für die Basenproduktion bei 99%.

Der Spannungsabfall an der bipolaren Membran betrug 1,33 Volt. Insgesamt betrug der Spannungsabfall an den Membranen (Kationen + Anionen + bipolare Membran) ca. 1,7 Volt, was einem energetischen Wirkungsgrad von ca. 40 bis 50% entspricht.

Tabelle 1

| Beispiel Nr. | Bezeichnung Art | Hauptketten polymeres | Länge d. CH$_2$-Seitenkette (C-Atome) | Ionogene Gruppe | Festionen-konzentration Equ/kg | Wasser-gehalt % | Dicke mm |
|---|---|---|---|---|---|---|---|
| 1 | | Polysulfon 1) | 6 | $N(CH_3)_3$ | 1,7 | 30 | 0,23 |
| 2 | | Polyethersulfon 2) | 6 | $SO_3H$ | 1,9 | 33 | 0,42 |
| 3 | | Polyethersulfon 2) | 7 | $COOH$ | 1,9 | 29 | 0,35 |
| 4 | | Polyethersulfon 2) | 6 | $N(CH_3)_3$ | 1,6 | 35 | 0,48 |
| 5 | | Polyetherketon 3) | 12 | $SO_3H$ | 0,9 | 29 | 0,18 |
| 6 | | Polyetherketon 3) | 13 | $SO_3H$ | 0,9 | 33 | 0,22 |
| 7 | C66-5T(Kation) 4) | Styrol/Divinyl-benzol-Copolymer | — | $SO_3H$ | 3,3 | 34 | 0,16 |
| 8 | 61 AZL 183 (Kation) 5) | Vinylchlorid/Acryl-nitril-Copolymer | — | — | 2,0 | 40 | 0,6 |
| 9 | AMV (Anion) 6) | Styrol/Butadien-Co-polymer | — | $N(CH_3)_3$ | 1,9 | 19 | 0,16 |
| 10 | 103 PZL 183 (Anion) 5) | Vinylchlorid/Acryl-nitril-Copolymer | — | $N(CH_3)_3$ | 1,2 | 38 | 0,6 |

1) Relative Viskosität einer 1%-igen Lösung in N-Methylpyrrolidon bei 25 °C: 1,7
2) Relative Viskosität einer 1%-igen Lösung in N-Methylpyrrolidon bei 25 °C: 1,6
3) Relative Viskosität einer 0,5%-igen Lösung in konz. Schwefelsäure bei 25 °C:1,65
4) Tokuyama Soda Co. Ltd.
5) Ionics Inc.
6) Asahi Glass Co. Ltd.

Tabelle 2

Zeit in Stunden bis zum Anstieg des Widerstands und Abfall der Festionen-Konzentration in verschiedenen Medien und Temperaturen

| Beispiel Nr. | Widerstand in CaCl, 25°C $\Omega.cm^2$ | 1n HCl | | 1n NaOH | | 0,1n $K_2CrO_4$/1n HCl/1n NaCl | |
|---|---|---|---|---|---|---|---|
| | | 25°C | 85°C | 25°C | 85°C | 25°C | 85°C |
| 1 | 0,8 | ca. 5 000 | ca. 500 | ca. 5 000 | ca. 150 | ca. 5 000 | ca. 500 |
| 2 | 0,7 | ca. 5 000 | ca. 500 | ca. 5 000 | ca. 500 | ca. 5 000 | ca. 500 |
| 3 | 0,5 | ca. 5 000 | ca. 500 | ca. 5 000 | ca. 500 | ca. 5 000 | ca. 500 |
| 4 | 0,9 | ca. 5 000 | ca. 500 | ca. 5 000 | ca. 200 | ca. 5 000 | ca. 500 |
| 5 | 0,7 | ca. 5 000 | ca. 500 | ca. 5 000 | ca. 500 | ca. 5 000 | ca. 500 |
| 6 | 0,6 | ca. 5 000 | ca. 500 | ca. 5 000 | ca. 500 | ca. 5 000 | ca. 500 |
| 7 | 1,5 | 500 | < 5 | 600 | < 5 | ca. 5 000 | ca. 100 |
| 8 | 4,5 | 2 000 | < 5 | 600 | < 5 | ca. 5 000 | ca. 200 |
| 9 | 5 | 2 000 | < 5 | 10 | < 1 | ca. 5 000 | ca. 100 |
| 10 | 5 | 2 000 | < 5 | 10 | < 1 | ca. 5 000 | ca. 5 |

Tabelle 3

| | vorher | nachher |
|---|---|---|
| Volumen, das die Kammern 1 durchströmt (ml) | 2 350 | 2 208 |
| Volumen, das die Kammern 2 durchströmt (ml) | 950 | 1 029 |
| Säurekonzentration in den Kammern 2 | 1n | 2,35n |
| Volumen, das die Kammern 3 durchströmt (ml) | 1 155 | 1 098 |
| NaOH-Konzentration in den Kammern 3 | 1n | 2,40n |

## Patentansprüche

1. Membranen aus im wesentlichen unvernetzten aromatische Strukturelemente enthaltenden organischen Polymeren mit einer Erweichungstemperatur oberhalb 80 °C, die an der Polymerkette über einen Alkylenrest in einem Abstand von mindestens 4 Kohlenstoffatomen gebundene ionogene Gruppen enthalten.

2. Membranen nach Anspruch 1, dadurch gekennzeichnet, dass die ionogenen Gruppen tert.-Amino- oder quarternäre Ammoniumgruppen sind.

3. Membranen nach Anspruch 1, dadurch gekennzeichnet, dass die ionogenen Gruppen Carboxyl- oder Sulfonsäuregruppen sind.

4. Membranen nach den Ansprüchen 1 bis 3, dadurch gekennzeichnet, dass sie 0,1 bis 5 Äquivalente ionogene Gruppen je kg Polymeres enthalten.

5. Membranen nach den Ansprüchen 1 bis 4, dadurch gekennzeichnet, dass die organischen Polymere aromatische Polysulfone oder aromatische Polyetherketone sind.

6. Membranen nach den Ansprüchen 1 bis 5, dadurch gekennzeichnet, dass die ionogenen Gruppen über einen Alkylenrest in einem Abstand von mindestens 6 Kohlenstoffatomen an die Polymerkette gebunden sind.

7. Membranen nach den Ansprüchen 1 bis 6, dadurch gekennzeichnet, dass sie aus einer Schicht Kationaustauschermembran und einer Schicht Anionenaustauschermembran aufgebaut sind.

## Revendications

1. Membranes en polymères organiques, contenant des éléments structuraux aromatiques essentiellement non réticulés, d'une température de ramollissement supérieure à 80 °C, comprenant des groupes ionogènes fixés à la chaîne polymère par l'intermédiaire d'un radical alkylène, à une distance d'au moins quatre atomes de carbone.

2. Membranes suivant la revendication 1, caractérisées en ce que les groupes ionogènes sont des groupes amino tertiaire ou ammonium quaternaire.

3. Membranes suivant la revendication 1, caractérisées en ce que les groupes ionogènes sont des groupes carboxyle ou acide sulfonique.

4. Membranes suivant les revendications 1 à 3, caractérisées en ce qu'elles contiennent entre 0,1 et 5 équivalents de groupes ionogènes par kg de polymère.

5. Membranes suivant les revendications 1 à 4, caractérisées en ce que les polymères organiques sont des polysulfones aromatiques ou des polyéther-cétones aromatiques.

6. Membranes suivant les revendications 1 à 5, caractérisées en ce que les groupes ionogènes sont fixés à la chaîne polymère par un radical alkylène, à une distance d'au moins six atomes de carbone.

7. Membranes suivant les revendications 1 à 6, caractérisées en ce qu'elles sont constituées d'une couche d'une membrane échangeuse de cations et d'une couche d'une membrane échangeuse d'anions.

## Claims

1. A membrane of substantially non-crosslinked organic polymers having a softening temperature above 80 °C and containing aromatic structural elements, which polymers contain ionogenic groups bonded to the polymer chain via an alkylene radical at intervals of at least 4 carbon atoms.

2. A membrane as claimed in claim 1, wherein the ionogenic groups are tert.-amino groups or quaternary ammonium groups.

3. A membrane as calimed in claim 1, wherein the ionogenic groups are carboxyl groups or sulfonic acid groups.

4. A membrane as claimed in claims 1 to 3, which contains from 0,1 to 5 equivalents of ionogenic groups per kg of polymer.

5. A membrane as claimed in claims 1 to 4, wherein the organic polymers are aromatic polysulfones or aromatic polyetherketones.

6. A membrane as claimed in claims 1 to 5, wherein the ionogenic groups are bonded to the polymer chain via an alkylene radical at intervals of at least 6 carbon atoms.

7. A membrane as claimed in claims 1 to 6, which is composed of a layer of cation exchange membrane and a layer of anion exchange membrane.